# EUROPEAN PATENT SPECIFICATION

(11) **EP 1 640 964 B1**
(45) Date of publication and mention of the grant of the patent: **02.03.2011**
(21) Application number: 04792420.4
(22) Date of filing: 07.10.2004
(51) Int. Cl.: G09G 3/36, G02F 1/133

(54) **MATRIX TYPE DISPLAY APPARATUS AND METHOD OF DRIVING THE SAME**
MATRIXANZEIGEVORRICHTUNG UND IHR VERFAHREN ZUM ANSTEUERN
DISPOSITIF D'AFFICHAGE MATRICIEL ET PROCEDE POUR COMMANDER CE DERNIER

(30) Priority: 16.10.2003 JP 2003356126
(43) Date of publication of application: 29.03.2006
(73) Proprietor: Panasonic Corporation, Kadoma-shi Osaka 571-8501 (JP)
(72) Inventor: ARIMOTO, Katsuyuki, Okayama-shi, Okayama (JP); KOBAYASHI, Takahiro, Okayama-shi, Okayama (JP); OHTA, Yoshihito, Okayama-shi, Okayama (JP); MATSUMOTO, Keizo, Akaiwa-shi, Okayama (JP)
(74) Representative: TBK-Patent
(86) International application number: PCT/JP2004/015192
(87) International publication number: WO 2005/038766

(56) References cited:
- WO-A-02/059685
- JP-A- 5 236 400
- JP-A- 7 121 144
- JP-A- 7 191 634
- JP-A- 9 090 910
- JP-A- 2001 147 673
- JP-A- 2004 302 270
- US-A1- 2003 146 893
- US-A1- 2003 227 429

## Description

### Technical Field

The present invention relates to a matrix-type display apparatus which drives a plurality of pixels disposed in matrix form and displays an image, and its driving method.

### Background Art

In a liquid-crystal display apparatus where a TN (or twisted nematic) system is used, a liquid crystal has a refractive-index anisotropy, a twist orientation, or the like. Thus, a beam of light which passes through a liquid-crystal layer is subjected to various birefringence effects, depending upon its direction or angle. This allows a complicated visual-angle dependence to appear. For example, the whole screen image becomes whitish at an upper visual angle while the entire screen image becomes dark at a lower visual angle. Besides, light and shade are reversed within an image's low-luminance range. In terms of these visual-angle characteristics, various techniques have been developed for widening a viewing angle about a luminance, a hue, a contrast characteristic, a gradation characteristic, or the like.

For example, Japanese Patent Laid-Open No. 5-68221 specification discloses a liquid-crystal display apparatus. If the number of times at which a signal is written in one pixel for a one-field period is n, then n+1 levels are driven using only two black and white values. The other levels are driven using a combination of a gray level and white or black level. Thereby, a γ-characteristic (i.e., a transmittance characteristic according to an input level) is changed.

In addition, another liquid-crystal display apparatus is disclosed in Japanese Patent Laid-Open No. 9-90910 specification. A plurality of applied voltages which are generated by a plurality of conversion methods of converting input signals at the same level into different applied voltages are selectively applied for each pixel. Thereby, two different types of γ -characteristics are switched so that the distribution area ratios are identical.

However, in the former liquid-crystal display apparatus, two black and white values are used only in the case where the transmittance to be used for display is 50 percent. Then, a combination of a gray level and white or black level is used in the case of the other transmittances. Hence, a viewing angle characteristic can be improved at a transmittance of 50 percent. However, at a transmittance other than this, for example, at 25 percent or 75 percent, if a viewing angle is deflected, a γ -characteristic after synthesized deviates largely from an intrinsic γ-characteristic. This makes it impossible to realize a good viewing angle characteristic at a wide-ranging transmittance.

Furthermore, in the latter liquid-crystal display apparatus, a synthetic γ-characteristic is used which is obtained through a synthesis after two types of γ -characteristics are changed so that the distribution area ratios are the same. Therefore, if a viewing angle is deflected, then in accordance with a transmittance, a γ -characteristic after synthesized deviates largely from an intrinsic γ -characteristic. Even in this case, a good viewing angle characteristic cannot be realized at a wide-ranging transmittance.

Document US2003/0146893 A1 discloses a liquid crystal display device including a liquid crystal panel being capable of gradation display with a look-up table and a drive signal generation section for adjusting gradation curve's distortion with respect to a viewing angle, which indicates a relation between a gradation and a luminance on a display screen of the liquid crystal panel.

The liquid crystal display device displays gradations with improved viewing angle properties by providing two sub-pixels per colour and applying different gamma mapping characteristics for each sub-pixel. Multiple pairs of gamma characteristics may be present and selected according to the desired contrast. The claims have been characterized with respect to US2003/0146893 A1.

Document WO 02/059685 A2 discloses improving viewing angle characteristics of a liquid crystal display by reducing the number of sub-pixels in an image with mid-tone luminance values.

### Disclosure of the Invention

It is an object of the present invention to provide a matrix-type display apparatus and its driving method which are capable of realizing a good viewing angle characteristic at a wide-ranging transmittance.

A matrix-type display apparatus according to an appended independent claim is provided. Modifications thereof are set forth in its dependent claims.

A driving method for a matrix-type display apparatus according to another independent appended claim is provided.

The display apparatus and the driving method help realize a good viewing angle characteristic at a wide-ranging transmittance.

### Brief Description of the Drawings

Fig. 1 is a block diagram, showing the configuration of a liquid-crystal display apparatus according to an illustrative example.
Fig. 2 is a graphical representation, showing an example of a first type of first γ -characteristic γ 1A and second γ -characteristic γ 2A which are used in the liquid-crystal display apparatus shown in Fig. 1.
Fig. 3 is a graphical representation, showing an example of a second type of first γ -characteristic γ 1B and second γ -characteristic γ 2B which are used in the liquid-crystal display apparatus shown in Fig. 1.
Fig. 4 is a graphical representation, showing an example of a third type of first γ -characteristic γ 1C and second γ -characteristic γ 2C which are used in the liquid-crystal display apparatus shown in Fig. 1.
Figs. 5A to 5C are illustrations, showing an example of change patterns for first to third types of pairs of γ -characteristics which are used in the liquid-crystal display apparatus shown in Fig. 1.
Fig. 6 is a graphical representation, showing an example of the control of a γ -characteristic in accordance with a transmittance in the liquid-crystal display apparatus shown in Fig. 1.
Fig. 7 is a block diagram, showing the configuration of a liquid-crystal display apparatus according to a first embodiment of the present invention.
Fig. 8 is an illustration, showing the configuration of a pixel in a liquid-crystal panel shown in Fig. 7.
Fig. 9 is a graphical representation, showing an example of a first type of first γ -characteristic γ 1A, a first type of second γ -characteristic γ 2A, a second type of first γ -characteristic γ 1B and a second type of second γ -characteristic γ 2B which are used in the liquid-crystal display apparatus shown in Fig. 7.
Fig. 10 is a graphical representation, showing an example of the control of a γ -characteristic in accordance with a transmittance in the liquid-crystal display apparatus shown in Fig. 7.
Fig. 11 is a block diagram, showing the configuration of a liquid-crystal display apparatus according to a second embodiment of the present invention.
Fig. 12 is an illustration, showing the configuration of a pixel in a liquid-crystal panel shown in Fig. 11.
Fig. 13 is a graphical representation, showing an example of first to seventh types of first T -characteristics γ 1A to γ 1G and second γ -characteristics γ 2A to γ 2G which are used in the liquid-crystal display apparatus shown in Fig. 11.
Fig. 14 is a graphical representation, showing an example of the control of a γ -characteristic in accordance with a transmittance in the liquid-crystal display apparatus shown in Fig. 11.
Fig. 15 is a graphical representation, showing a first partially-enlarged part of the graphical representation shown in Fig. 14.
Fig. 16 is a graphical representation, showing a second partially-enlarged part of the graphical representation shown in Fig. 14.
Fig. 17 is a graphical representation, showing a third partially-enlarged part of the graphical representation shown in Fig. 14.
Fig. 18 is a graphical representation, showing a fourth partially-enlarged part of the graphical representation shown in Fig. 14.

### Best Mode for Implementing the Invention

Hereinafter, amatrix-type display apparatus according to the present invention will be described with reference to the attached drawings. In the illustrative example and each embodiment described below, a liquid-crystal display apparatus is described as an example of the matrix-type display apparatus. However, the matrix-type display apparatus to which the present invention is applied is not limited especially to this example. It can be similarly applied to another matrix-type display apparatus such as an organic EL (or electro-luminescence) display apparatus, as long as it has a viewing angle characteristic.

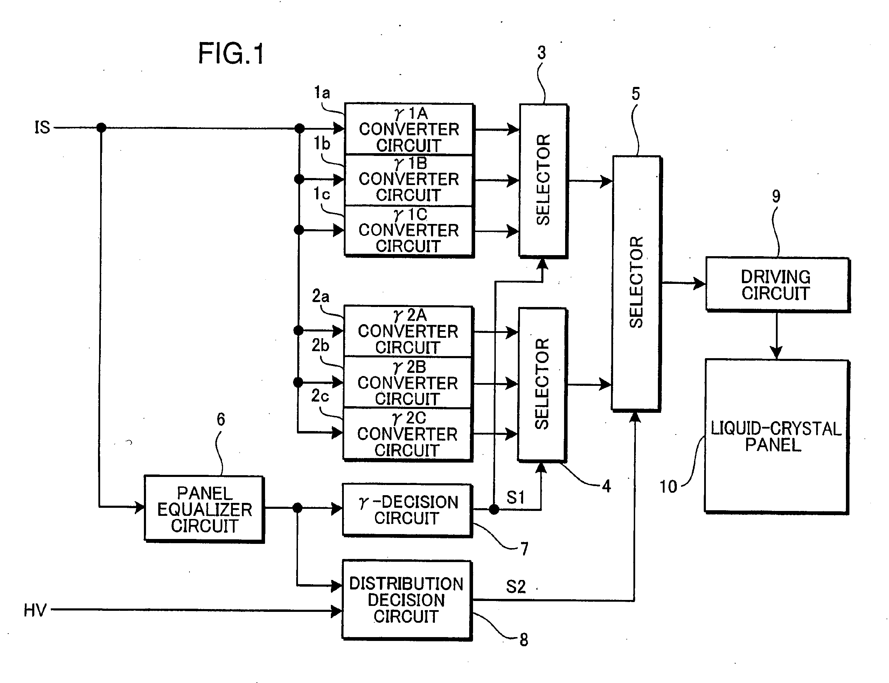

Fig. 1 is a block diagram, showing the configuration of a liquid-crystal display apparatus according to an illustrative example. The liquid-crystal display apparatus shown in Fig. 1 includes: a γ 1A converter circuit 1a; a γ 1B converter circuit 1b; a γ 1C converter circuit 1c; a γ 2A converter circuit 2a; a γ 2B converter circuit 2b; a γ 2C converter circuit 2c; selectors 3 to 5; a panel equalizer circuit 6; a γ -decision circuit 7; a distribution decision circuit 8; a driving circuit 9; and a liquid-crystal panel 10.

In the γ 1A converter circuit 1a, the γ 1B converter circuit 1b, the γ 1C converter circuit 1c, the γ 2A converter circuit 2a, the γ 2B converter circuit 2b, the γ 2C converter circuit 2c and the panel equalizer circuit 6, a video signal IS is inputted which is separate according to each color component of R, G, B. In the distribution decision circuit 8, a synchronizing signal HV of the video signal IS is inputted, such as a vertical synchronizing signal and a horizontal synchronizing signal. The video signal IS and the synchronizing signal HV are signals which are inputted from a predetermined video output circuit (not shown) or the like.

The γ 1A converter circuit 1a γ -converts the video signal IS, using a first type of first γ -characteristic γ 1A. Then, it outputs the γ -corrected video signal to the selector 3. The γ 2A converter circuit 2a γ -Converts the video signal IS, using a first type of second γ -characteristic γ 2A. Then, it outputs the γ -corrected video signal to the selector 4. Herein, the first type of first γ -characteristic γ 1A and second γ -characteristic γ 2A are γ -characteristics which are complementary to each other. They are the first type of pair of γ -characteristics used for the video signal IS which has a low transmittance.

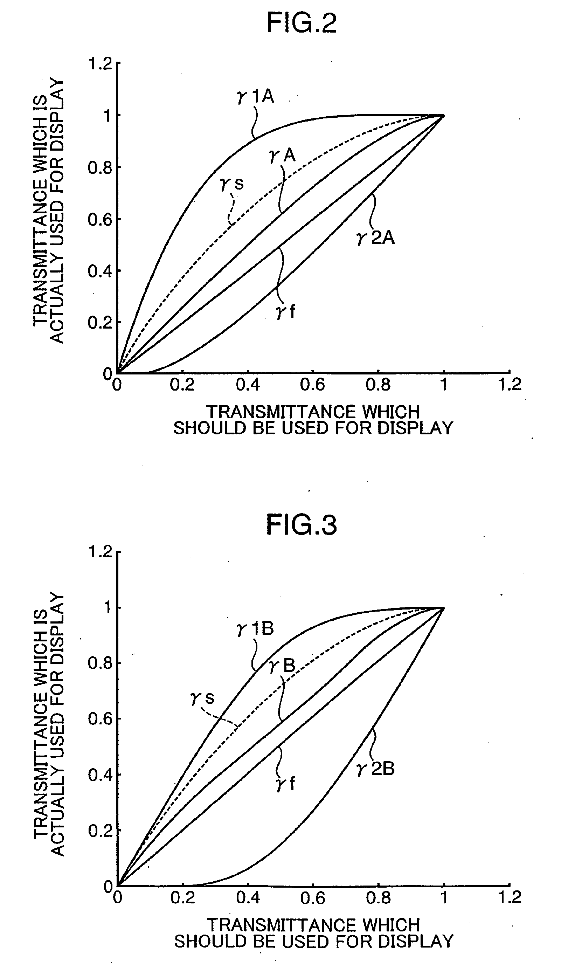

Fig. 2 is a graphical representation, showing an example of the first type of first γ -characteristic γ 1A and second γ -characteristic γ 2A which are used in the liquid-crystal display apparatus shown in Fig. 1. In Fig. 2, as the first type of γ -characteristics (i.e., the transmittance characteristics which correspond to an input level), a transmittance (which is equivalent to an input) which should be used for display is used as the horizontal axis and a transmittance (which is equivalent to an output) which is actually used for display is used as the vertical axis. These graphs indicate γ -characteristics in such a case, and each transmittance is a normalized value.

A reference γ -characteristic γ f at the front vision (zero degrees) is linear. As shown in the figure, a γ -characteristic γ s at a non-front vision (e.g., horizontal 45 degrees) is shifted from γ f, so that it is deteriorated. Incidentally, these reference γ -characteristic γ f and γ -characteristic γ s at a non-front vision are also the same in the following embodiments. Hence, their description is omitted below.

As shown in Fig. 2, the γ 1A converter circuit 1a has the first type of first γ -characteristic γ 1A, and the γ 2A converter circuit 2a has the first type of second γ -characteristic γ 2A. The output of the γ 1A converter circuit 1a and the output of the γ 2A converter circuit 2a are switched using a change pattern (described later) for a first type of pair of γ -characteristics. Thereby, the first type of first γ -characteristic γ 1A and the first type of second γ -characteristic γ 2A are synthesized, so that the γ -characteristic after synthesized becomes a first type of synthetic γ -characteristic γ A. If this first type of synthetic γ -characteristic γ A is compared with the reference γ -characteristic γ f at the front vision (zero degrees) as well as the γ -characteristic γ s at a non-front vision, the discrepancy between it and γ f is smaller than that between it and γ s. Hence, it can be seen that its characteristic is improved. Besides, the discrepancy between it and the reference γ -characteristic γ f can be seen to be smaller within the range where the transmittance which should be used for display is lower.

Herein, the distribution area ratio of pixels driven using the output of the γ 1A converter circuit 1a and the distribution area ratio of pixels driven using the output of the γ 2A converter circuit 2a are set at 1/4:3/4. If the transmittance which should be used for display is x, the first type of first γ -characteristic γ 1A and second γ -characteristic γ 2A are predetermined so that γ 1A(x)+3× γ 2A(x)=4x is satisfied.

This means maintaining such a relation that the average after multiplied by the distribution area ratios becomes the transmittance x which should be used for display. In other words, it indicates that the transmittance which has been used for display according to the first γ -characteristic and the second γ -characteristic becomes, on average, the initial transmittance x which should be used for display. Incidentally, the following description is also the same.

In this illustrative example, the first type of first γ -characteristic γ 1A and second γ -characteristic γ 2A are determined, for example, as a reference, using the skin color of the video signal IS. This is because the skin color is a color to which humans are most visually-sensitive and visual sense characteristics on the skin color is most visible. In this respect, the other γ -characteristics are also the same.

The γ 1B converter circuit 1b γ -converts the video signal IS, using a second type of first γ -characteristic γ 1B. Then, it outputs the T-corrected video signal to the selector 3. The γ 2B converter circuit 2b γ -converts the video signal IS, using a second type of second γ -characteristic γ 2B. Then, it outputs the γ -corrected video signal to the selector 4. Herein, the second type of first γ -characteristic γ 1B and second γ -characteristic γ 2B are γ -characteristics which are complementary to each other. They are the second type of pair of γ -characteristics used for the video signal IS which has an intermediate transmittance.

Fig. 3 is a graphical representation, showing an example of the second type of first γ -characteristic γ 1B and second γ -characteristic γ 2B which are used in the liquid-crystal display apparatus shown in Fig. 1. As shown in Fig. 3, the γ 1B converter circuit 1b has the second type of first T -characteristic γ 1B, and the γ 2B converter circuit 2b has the second type of second γ -characteristic γ 2B. The output of the γ 1B converter circuit 1b and the output of the γ 2B converter circuit 2b are switched using a change pattern (described later) for a second type of pair of γ -characteristics. Thereby, the second type of first γ -characteristic γ 1B and the second type of second γ -characteristic γ 2B are synthesized, so that the γ -characteristic after synthesized becomes a second type of synthetic γ -characteristic γ B. If this second type of synthetic γ -characteristic *γ* B is compared with the reference γ -characteristic γ f at the front vision as well as the γ -characteristic γ s at a non-front vision, the discrepancy between it and γ f is smaller than that between it and γ s. Hence, it can be seen that its characteristic is improved. Besides, the discrepancy between it and the reference T -characteristic γ f can be seen to be smaller within the range where the transmittance which should be used for display is intermediate.

Herein, the distribution area ratio of pixels driven using the output of the γ 1B converter circuit 1b and the distribution area ratio of pixels driven using the γ 2B converter circuit 2b are set at 2/4:2/4. If the transmittance which should be used for display is x, the second type of first γ -characteristic γ 1B and second γ -characteristic γ 2B are predetermined so that 2× γ 1B(x)+2× γ 2B(x)=4x is satisfied.

The γ 1C converter circuit 1c γ -converts the video signal IS, using a third type of first γ -characteristic γ 1C. Then, it outputs the γ -corrected video signal to the selector 3. The γ 2C converter circuit 2c γ -converts the video signal IS, using a third type of second γ -characteristic γ 2C. Then, it outputs the γ -corrected video signal to the selector 4. Herein, the third type of first γ -characteristic γ 1C and second γ -characteristic γ 2C are γ -characteristics which are complementary to each other. They are the third type of pair of γ -characteristics used for the video signal IS which has a high transmittance.

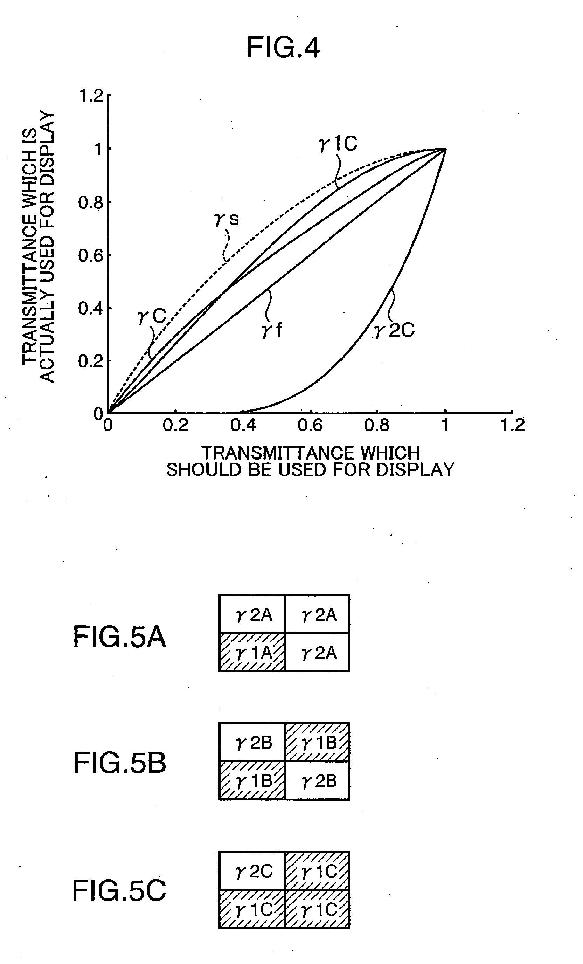

Fig. 4 is a graphical representation, showing an example of the third type of first γ -characteristic γ 1C and second γ -characteristic γ 2C which are used in the liquid-crystal display apparatus shown in Fig. 1. As shown in Fig. 4, the γ 1C converter circuit 1c has the third type of first γ -characteristic γ 1C, and the γ 2C converter circuit 2c has the third type of second γ -characteristic γ 2C. The output of the γ 1C converter circuit 1c and the γ 2C converter circuit 2c are switched using a change pattern (described later) for a third type of pair of γ -characteristics. Thereby, the third type of first γ -characteristic γ 1C and the third type of second γ -characteristic γ 2C are synthesized, so that the γ -characteristic after synthesized becomes a third type of synthetic γ -characteristic γ C. If this third type of synthetic γ -characteristic γ C is compared with the reference γ -characteristic γ f at the front vision as well as the γ -characteristic. γ s at a non-front vision, the discrepancy between it and γ f is smaller than that between it and γ s. Hence, it can be seen that its characteristic is improved. Besides, the discrepancy between it and the reference γ -characteristic γ f can be seen to be smaller within the range where the transmittance which should be used for display is higher.

Herein, the distribution area ratio of pixels driven using the output of the γ 1C converter circuit 1c and the distribution area ratio of pixels driven using the γ 2C converter circuit 2c are set at 3/4:1/4. If the transmittance which should be used for display is x, the third type of first γ -characteristic γ 1C and second γ -characteristic γ 2C are predetermined so that 3 × γ 1C(x)+ γ 2C(x)=4x is satisfied.

Incidentally, the configuration of a γ -converter circuit is not limited especially to the above described example, and thus, various changes can be made. A variety of configurations can be used, such as an analog system, an arithmetic system and an ROM-table system. Besides, in a liquid-crystal display apparatus, because of characteristics of a color filter, a back light, or the like, γ -characteristics are not coincident over every gradation among RGB signals. Hence, it has a color-shift characteristic. Therefore, in order to restrain a change in hue or the like and correct a viewing angle, a γ -converter circuit may be provided for each RGB signal.

The panel equalizer circuit 6 is a circuit which has a conversion characteristic equivalent to an input-and-output characteristic P(x) of the liquid-crystal panel 10. It outputs a video signal into which the video signal IS has been converted using the input-and-output characteristic P(x) of the liquid-crystal panel 10, to the γ -decision circuit 7 and the distribution decision circuit 8.

The γ -decision circuit 7 specifies a transmittance to be used for display from the video signal corrected by use of the input-and-output characteristic P(x) of the liquid-crystal panel 10. Then, it outputs, to the selectors 3 and 4, a selection signal S1 for selecting a γ -converter circuit which executes a γ -conversion using the pair of γ -characteristics which corresponds to the transmittance it has specified. The relation between a transmittance and first to third types of pairs of γ -characteristics is stored in advance, for example, in an ROM-table form or the like inside of the γ -decision circuit 7.

The distribution decision circuit 8 specifies the pixel position of the video signal IS on the display screen of the liquid-crystal panel 10, as a reference, using the vertical synchronizing signal and horizontal synchronizing signal of the synchronizing signal HV. It also specifies a transmittance to be used for display from the video signal corrected by use of the input-and-output characteristic P(x) of the liquid-crystal panel 10. Then, it outputs, to the selector 5, a selection signal S2 for changing the γ -characteristic using the change pattern which corresponds beforehand to the pair of γ -characteristics of the transmittance it has specified. Incidentally, the configuration of a γ -decision circuit and a distribution decision circuit is not limited especially to the above described example, and thus, various changes can be made. Without the panel equalizer circuit 6, a transmittance may also be calculated from the video signal IS in a γ -decision circuit and a distribution decision circuit.

The selector 3 selects one output from among the three outputs of the γ 1A converter circuit 1a, the γ 1B converter circuit 1b and the γ 1C converter circuit 1c according to the selection signal S1. Then, it outputs it to the selector 5. It selects the output of the γ 1A converter circuit 1a if the transmittance is low, selects the output of the γ 1B converter circuit 1b if the transmittance is intermediate, and selects the output of the γ 1C converter circuit 1c if the transmittance is high.

The selector 4 selects one output from among the three outputs of the γ 2A converter circuit 2a, the γ 2B converter circuit 2b and the γ 2C converter circuit 2c according to the selection signal S1. Then, it outputs it to the selector 5. It selects the output of the γ 2A converter circuit 2a if the transmittance is low, selects the output of the γ 2B converter circuit 2b if the transmittance is intermediate, and selects the output of the γ 2C converter circuit 2c if the transmittance is high.

The selector 5 selects one output out of the two outputs of the selectors 3, 4 according to the selection signal S2 and outputs it to the driving circuit 9. If the transmittance is low, it switches the outputs of the γ 1A converter circuit 1a and the γ 2A converter circuit 2a to a change pattern for a first type of pair of γ -characteristics. If the transmittance is intermediate, it switches the outputs of the γ 1B converter circuit 1b and the γ 2B converter circuit 2b to a change pattern for a second type of pair of γ -characteristics. If the transmittance is high, it switches the outputs of the γ 1C converter circuit 1c and the γ 2C converter circuit 2c to a change pattern for a third type of pair of γ -characteristics.

Figs. 5A to 5C are illustrations, showing an example of the change patterns for the first to third types of pairs of γ -characteristics which are used in the liquid-crystal display apparatus shown in Fig. 1. Fig. 5A shows the change pattern for the first type of pair of γ -characteristics. Fig. 5B shows the change pattern for the second type of pair of γ -characteristics. Fig. 5C shows the change pattern for the third type of pair of γ -characteristics. In Figs. 5A to 5C, only patterns for four adjacent pixels are indicated. These patterns are repeated on the liquid-crystal panel 10, so that the γ -characteristics are changed over the whole display screen. Incidentally, the polarity of a driving voltage for each pixel is inverted in each frame, but in Figs. 5A to 5C, such a polarity is not shown in the figure.

First, as shown in Fig. 5A, in the change pattern for the first type of pair of γ -characteristics, the first type of first γ -characteristic γ 1A is used only for one pixel (i.e., the lower-left pixel) of the four pixels. The first type of second γ -characteristic γ 2A is used for the other pixels. Therefore, the percentage of the distribution area ratio of pixels driven using the output of the first type of first γ -characteristic γ 1A and the distribution area ratio of pixels driven using the output of the first type of second γ -characteristic γ 2A is 1/4:3/4.

Next, as shown in Fig. 5B, in the change pattern for the second type of pair of γ -characteristics, the second type of first γ -characteristic γ 1B is used for two pixels (i.e., the lower-left and upper-right pixels) of the four pixels. The second type of second γ -characteristic γ 2B is used for the other two pixels. Therefore, the percentage of the distribution area ratio of pixels driven using the output of the second type of first γ -characteristic γ 1B and the distribution area ratio of pixels driven using the output of the second type of second γ -characteristic γ 2B is 2/4:2/4.

Lastly, as shown in Fig. 5C, in the change pattern for the third type of pair of γ -characteristics, the third type of second γ -characteristic γ 2C is used only for one pixel (i.e., the upper-left pixel) of the four pixels. The third type of first γ -characteristic γ 1C is used for the other pixels. Therefore, the percentage of the distribution area ratio of pixels driven using the output of the third type of first γ -characteristic γ 1C and the distribution area ratio of pixels driven using the output of the third type of second γ -characteristic γ 2C is 3/4:1/4.

The driving circuit 9 is formed by a polarity inverting circuit, a gate driving circuit, a source driving circuit, or the like. Using a video signal outputted from the selector 5, it drives the liquid-crystal panel 10 through the source driving circuit. Then, it displays an image indicated by the video signal IS in the liquid-crystal panel 10. The liquid-crystal panel 10 is a liquid-crystal panel which includes a plurality of pixels disposed in matrix form. For example, a TN (or twisted nematic) liquid-crystal panel, or a PVA (or patterned vertical alignment) liquid-crystal panel, can be used.

Herein, the number of pairs of γ -characteristics is not limited especially to the above described example. Two, four, or more, may also be used. Furthermore, the change pattern is not limited especially to the above described example, and thus, another change pattern may also be used. Moreover, the pixel unit in which the γ -characteristic is changed is not limited especially to the above described example. It may also be changed for an R-pixel, a G-pixel and a B-pixel, respectively, as one pixel. In addition, the configuration of a selector is not limited especially to the above described example. Various changes can be made, including forming the selectors 3 to 5 by a single selector. In these respects, the other embodiments are also the same.

In this illustrative example, the liquid-crystal panel 10 corresponds to an example of the display panel; the γ 1A converter circuit 1a, the γ 1B converter circuit 1b, the γ 1C converter circuit 1c, the γ 2A converter circuit 2a, the γ 2B converter circuit 2b and the γ 2C converter circuit 2c, to an example of the converting means; and the selectors 3 to 5, the γ -decision circuit 7 and the distribution decision circuit 8, to an example of the selecting means.

Herein, let's generalize the above described processing. If the number of types of pairs of γ -characteristics is n (which is an integer of two or above), then in a block unit of (n+1) pixels per block, one output is selected from among the 2n γ -corrected outputs, so that the distribution area ratio of first pixels driven by a video signal γ -corrected by use of the first γ -characteristic of each pair of γ -characteristics and the distribution area ratio of second pixels driven by a video signal γ -corrected by use of the second γ -characteristic are equal to a distribution area ratio specified in advance for each pair of γ -characteristics. At this time, the first and second distribution area ratios for each pair of γ -characteristics are selected out of k/(n+1) and (n+1-k)/(n+1), if k is an integer of one to n.

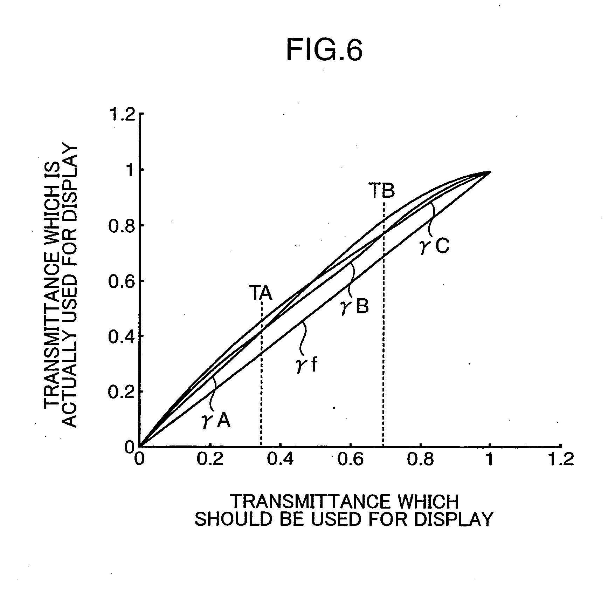

Next, an example will be described of the control of a γ -characteristic in accordance with a transmittance in the liquid-crystal display apparatus which has the above described configuration. Fig. 6 is a graphical representation, showing the example of the control of a γ -characteristic in accordance with a transmittance in the liquid-crystal display apparatus shown in Fig. 1.

As shown in Fig. 6, first, if the transmittance which should be used for display is within a range of 0 to TA, the γ -decision circuit 7 outputs, to the selectors 3, 4, a selection signal S1 for selecting the γ 1A converter circuit 1a and the γ 2A converter circuit 2a. Then, the selectors 3, 4 select the outputs of the γ 1A converter circuit 1a and the γ 2A converter circuit 2a and output them to the selector 5. The distribution decision circuit 8 outputs, to the selector 5, a selection signal S2 for changing the outputs of the γ 1A converter circuit 1a and the γ 2A converter circuit 2a using a change pattern for the first type of pair of γ -characteristics. Using the change pattern for the first type of pair of γ -characteristics, the selector 5 switches the outputs of the γ 1A converter circuit 1a and the γ 2A converter circuit 2a. Then, it outputs, to the driving circuit 9, a video signal γ -corrected by use of the first type of synthetic γ -characteristic γ A. As a result, if the transmittance which should be used for display is within the range of 0 to TA, the liquid-crystal panel 10 can be driven using the video signal γ -corrected by use of the first type of synthetic γ -characteristic γ A which is least shifted from the reference γ -characteristic γ f.

Next, if the transmittance which should be used for display is within a range of TA to TB, the γ -decision circuit 7 outputs, to the selectors 3, 4, a selection signal S1 for selecting the γ 1B converter circuit 1b and the γ 2B converter circuit 2b. Then, the selectors 3, 4 select the outputs of the γ 1B converter circuit 1b and the γ 2B converter circuit 2b and output them to the selector 5. The distribution decision circuit 8 outputs, to the selector 5, a selection signal S2 for changing the outputs of the γ1B converter circuit 1b and the γ 2B converter circuit 2b using a change pattern for the second type of pair of γ -characteristics. Using the change pattern for the second type of pair of γ -characteristics, the selector 5 switches the outputs of the γ 1B converter circuit 1b and the γ 2B converter circuit 2b. Then, it outputs, to the driving circuit 9, a video signal γ- corrected by use of the second type of synthetic γ -characteristic γ B. As a result, if the transmittance which should be used for display is within the range of TA to TB, the liquid-crystal panel 10 can be driven using the video signal γ -corrected by use of the second type of synthetic γ -characteristic γ B which is least shifted from the reference γ -characteristic γ f.

Sequentially, if the transmittance which should be used for display is within a range of TB to 1, the γ -decision circuit 7 outputs, to the selectors 3, 4, a selection signal S1 for selecting the γ 1C converter circuit 1c and the γ 2C converter circuit 2c. Then, the selectors 3, 4 select the outputs of the γ 1C converter circuit 1c and the γ 2C converter circuit 2c and output them to the selector 5. The distribution decision circuit 8 outputs, to the selector 5, a selection signal S2 for changing the outputs of the γ 1C converter circuit 1c and the γ 2C converter circuit 2c using a change pattern for the third type of pair of γ -characteristics. Using the change pattern for the third type of pair of γ -characteristics, the selector 5 switches the outputs of the γ 1C converter circuit 1c and the γ 2C converter circuit 2c. Then, it outputs, to the driving circuit 9, a video signal γ -corrected by use of the third type of synthetic γ -characteristic γ C. As a result, if the transmittance which should be used for display is within the range of TB to 1, the liquid-crystal panel 10 can be driven using the video signal γ -corrected by use of the third type of synthetic γ -characteristic γ C which is least shifted from the reference γ -characteristic γ f.

In this way, in this embodiment, the video signal IS is γ -converted, using three pairs of γ -characteristics which are made up of first and second γ -characteristics different from each other. Then, one pair of γ -characteristics are selected from among the three pairs of γ -characteristics according to a transmittance to be used for display, and one output is selected from among the six outputs so that the distribution area ratio of pixels driven by the video signal γ -corrected by use of the first γ-characteristic of the selected pairs of γ -characteristics and the distribution area ratio of pixels driven by the video signal as γ corrected by use of the second γ -characteristic of the selected pairs of γ -characteristics are equal to a distribution area ratio specified in advance for each pair of γ -characteristics. Therefore, the video signal γ -corrected by use of the first and the second γ -characteristics most suitable for a transmittance to be used for display are selected at the most suitable distribution area ratio for the transmittance to be used for display. This helps realize a good viewing angle characteristic at every transmittance.

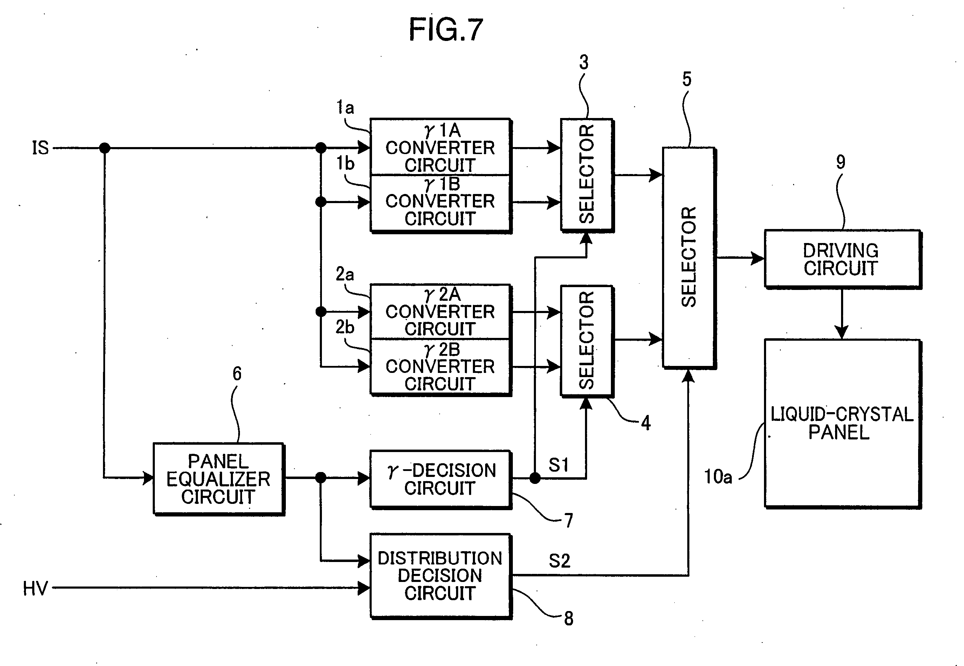

Next, a liquid-crystal display apparatus according to a first of the present invention will be described. Fig. 7 is a block diagram, showing the configuration of the liquid-crystal display apparatus according to the first of the present invention. The liquid-crystal display apparatus shown in Fig. 7 includes: a γ 1A converter circuit 1a; a γ 1B converter circuit 1b; a γ 2A converter circuit 2a; a γ 2B converter circuit 2b; selectors 3 to 5; a panel equalizer circuit 6; a γ -decision circuit 7; a distribution decision circuit 8; a driving circuit 9; and a liquid-crystal panel 10a.

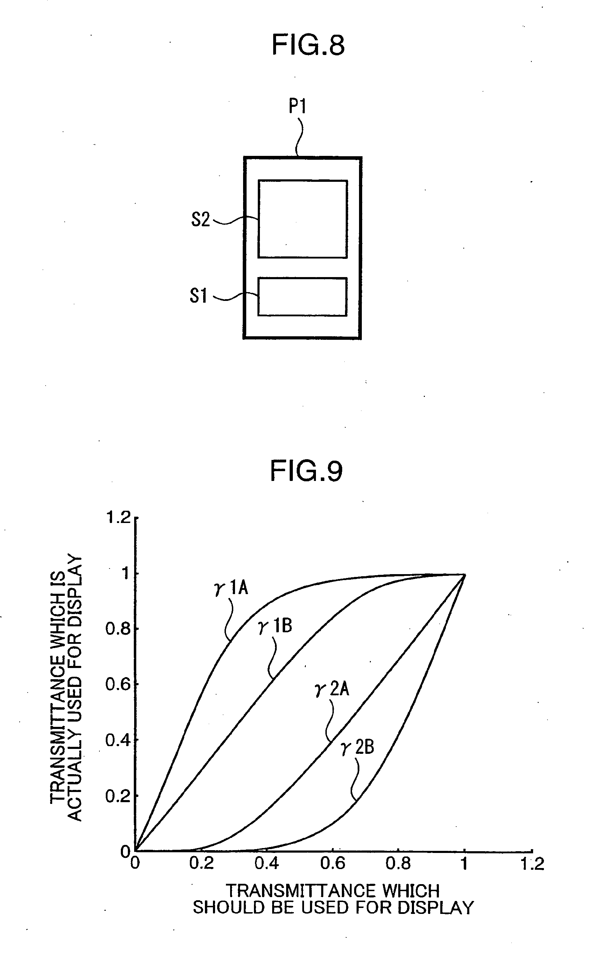

Fig. 8 is an illustration, showing the configuration of a pixel in a liquid-crystal panel shown in Fig. 7. In the liquid-crystal panel 10a, a pixel P1 as one pixel is made up of a first sub-pixel S1 which has a pixel area of Sa and a second sub-pixel S2 which has a pixel area of 2Sa. It is a liquid-crystal panel in which a plurality of such pixels are disposed in matrix form. The first sub-pixel S1 and the second sub-pixel S2 are separately driven by two TFTs (or thin-film transistors, not shown).

As described above, the ratio of the pixel area of the first sub-pixel S1 to the pixel area of the second sub-pixel S2 is 1:2. The first γ -characteristic is used for either of the first sub-pixel S1 and the second sub-pixel S2 while the second γ -characteristic is used for the other. Thereby, the distribution area ratio of a sub-pixel for which the first γ -characteristic is used and the distribution area ratio of a sub-pixel for which the second γ -characteristic is used can be set at 2/3:1/3 or 1/3:2/3.

Incidentally, as the liquid-crystal panel 10a, various ones can be used, as long as it has sub-pixels. For example, such a liquid-crystal panel can be used as disclosed in Japanese Patent Laid-Open No. 7-191634 specification, Japanese Patent Laid-Open No. 8-15723 specification, Japanese Patent Laid-Open No. 8-201777 specification, or Japanese Patent Laid-Open No. 10-142577 specification. Besides, the number of sub-pixels included in one pixel is not limited especially to the above described example. Thus, three or more sub-pixels may also be used. In addition, the size of each sub-pixel or each pixel is not necessarily unified, and thus, different sizes may also be used at the same time. In these respects, a third second described below is also the same.

In the γ 1A converter circuit 1a, the γ 1B converter circuit 1b, the γ 2A converter circuit 2a, the γ 2B converter circuit 2b and the panel equalizer circuit 6, a video signal IS is inputted which is separate according to each color component of R, G, B. In the distribution decision circuit 8 , a synchronizing signal HV of the video signal IS is inputted, such as a vertical synchronizing signal and a horizontal synchronizing signal.

The γ 1A converter circuit 1a γ -converts the video signal IS, using a first type of first γ -characteristic γ 1A. Then, it outputs the γ -corrected video signal to the selector 3. The γ 2A converter circuit 2a γ -converts the video signal IS, using a first type of second γ -characteristic γ 2A. Then, it outputs the γ -corrected video signal to the selector 4. Herein, the first type of first γ -characteristic γ 1A and second γ -characteristic γ 2A are γ -characteristics which are complementary to each other. They are the first type of pair of γ -characteristics used for the video signal IS which has a low transmittance.

The γ 1B converter circuit 1b γ -converts the video signal IS, using a second type of first γ -characteristic γ 1B. Then, it outputs the γ -corrected video signal to the selector 3. The γ 2B converter circuit 2b γ -converts the video signal IS, using a second type of second γ -characteristic γ 2B. Then, it outputs the γ -corrected video signal to the selector 4. Herein, the second type of first γ -characteristic γ 1B and second γ -characteristic γ 2B are γ-characteristics which are complementary to each other. They are the second type of pair of γ -characteristics used for the video signal IS which has a high transmittance.

Fig. 9 is a graphical representation, showing an example of the first type of first γ -characteristic γ 1A, the first type of second γ -characteristic γ 2A, the second type of first γ-characteristic γ 1B and the second type of second γ-characteristic γ 2B which are used in the liquid-crystal display apparatus shown in Fig. 7. As shown in Fig. 9, the γ 1A converter circuit 1a has the first type of first γ -characteristic γ 1A, and the γ 2A converter circuit 2a has the first type of second γ -characteristic γ 2A. Then, the γ 1B converter circuit 1b has the second type of first γ -characteristic γ 1B, and the γ 2B converter circuit 2b has the second type of second γ -characteristic γ 2B.

The panel equalizer circuit 6 is a circuit which has a conversion characteristic equivalent to an input-and-output characteristic P(x) of the liquid-crystal panel 10a. It outputs a video signal into which the video signal IS has been converted using the input-and-output characteristic P(x) of the liquid-crystal panel 10a, to the γ-decision circuit 7 and the distribution decision circuit 8.

The γ -decision circuit 7 specifies a transmittance to be used for display from the video signal corrected by use of the input-and-output characteristic P(x) of the liquid-crystal panel 10a. Then, it outputs, to the selectors 3 and 4, a selection signal S1 for selecting a γ -converter circuit which executes a γ -conversion using the first and second γ -characteristics of the pair of γ -characteristics which corresponds to the transmittance it has specified.

The distribution decision circuit 8 specifies the pixel position of the video signal IS on the display screen of the liquid-crystal panel 10a, as a reference, using the vertical synchronizing signal and horizontal synchronizing signal of the synchronizing signal HV. It also specifies a transmittance to be used for display from the video signal corrected by use of the input-and-output characteristic P(x) of the liquid-crystal panel 10a. Then, it outputs, to the selector 5, a selection signal S2 for driving a sub-pixel using the distribution area ratio which corresponds beforehand to the pair of γ -characteristics of the transmittance it has specified.

The selector 3 selects one output out of the two outputs of the γ 1A converter circuit 1a and the γ 1B converter circuit 1b according to the selection signal S1. Then, it outputs it to the selector 5. It selects the output of the γ 1A converter circuit 1a if the transmittance is low, and selects the output of the γ 1B converter circuit 1b if the transmittance is high.

The selector 4 selects one output out of the two outputs of the γ 2A converter circuit 2a and the γ 2B converter circuit 2b according to the selection signal S1. Then, it outputs it to the selector 5. It selects the output of the γ 2A converter circuit 2a if the transmittance is low, and selects the output of the γ 2B converter circuit 2b if the transmittance is high.

The selector 5 selects an output to be supplied to the liquid-crystal panel 10a out of the two outputs of the selectors 3, 4 according to the selection signal S2. Then, it outputs it to the driving circuit 9. If the transmittance is low, in other words, if the first type of pair of γ -characteristics is selected, then the outputs of the γ 1A converter circuit 1a and the γ 2A converter circuit 2a are outputted to the driving circuit 9, so that the percentage of the distribution area ratio of a sub-pixel which is driven using the output of the first type of first γ -characteristic γ 1A and the distribution area ratio of a sub-pixel which is driven using the output of the first type of second γ -characteristic γ 2A becomes 1/3:2/3. On the other hand, If the transmittance is high, in other words, if the second type of pair of γ -characteristics is selected, then the outputs of the γ 1B converter circuit 1b and the γ 2B converter circuit 2b are outputted to the driving circuit 9, so that the percentage of the distribution area ratio of a sub-pixel which is driven using the output of the second type of first γ -characteristic γ 1B and the distribution area ratio of a sub-pixel which is driven using the output of the second type of second γ -characteristic γ 2B becomes 2/3:1/3.

The driving circuit 9 is formed by a polarity inverting circuit, a gate driving circuit, a source driving circuit, or the like. Using a video signal outputted from the selector 5, it drives the liquid-crystal panel 10a through the source driving circuit. Then, it displays an image indicated by the video signal IS in the liquid-crystal panel 10a.

In this embodiment, the liquid-crystal panel 10a corresponds to an example of the display panel; the γ 1A converter circuit 1a, the γ 1B converter circuit 1b, the γ 2A converter circuit 2a and the γ 2B converter circuit 2b, to an example of the converting means; and the selectors 3 to 5, the γ -decision circuit 7 and the distribution decision circuit 8, to an example of the selecting means.

Herein, let's generalize the above described processing. If the number of types of pairs of γ -characteristics is n (which is an integer of two or above) and if each pixel of the display panel is made up of a first sub-pixel which has a first pixel area Sa and a second sub-pixel which has a second pixel area Sb (=m×Sa, herein, m>1), then in a block unit of the first sub-pixel and the second sub-pixel per block, an output to be supplied to the liquid-crystal panel is selected from among the 2n γ -corrected outputs, so that the percentage of the first distribution area ratio of sub-pixels driven by a video signal γ -corrected by use of the first γ -characteristic of each pair of γ -characteristics and the second distribution area ratio of sub-pixels driven by a video signal γ -corrected by use of the second γ -characteristic are equal to a distribution area ratio specified in advance for each pair of γ -characteristics. At this time, the first distribution area ratio and the second γ distribution area ratios for each pair of γ -characteristics are selected out of 1/(m+1) and m/(m+1). Herein, it is preferable that the above described second pixel area Sb satisfy the relation of 1.5Sa≦Sb≦3Sa. In this case, without lowering a display definition, using a display panel which includes two types of sub-pixels, a good viewing angle characteristic can be realized at a wide-ranging transmittance.

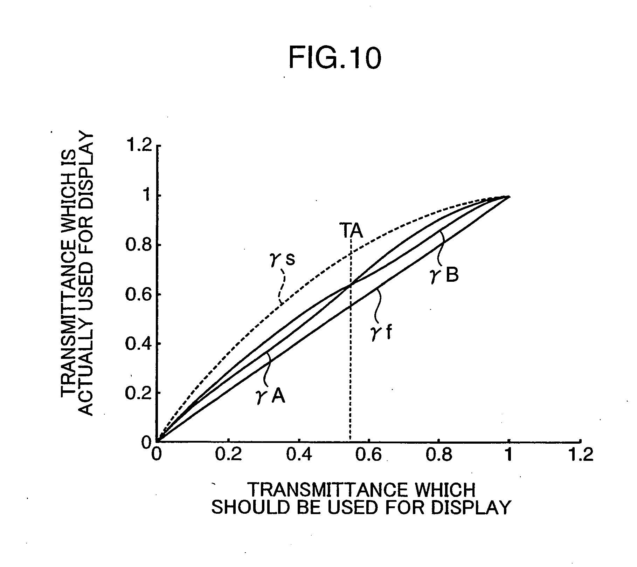

Next, an example will be described of the control of a γ -characteristic in accordance with a transmittance in the liquid-crystal display apparatus which has the above described configuration. Fig. 10 is a graphical representation, showing the example of the control of a γ -characteristic in accordance with a transmittance in the liquid-crystal display apparatus shown in Fig. 7.

As shown in Fig. 10, first, if the transmittance which should be used for display is within a range of 0 to TA, the γ-decision circuit 7 outputs, to the selectors 3, 4, a selection signal S1 for selecting the γ 1A converter circuit 1a and the γ 2A converter circuit 2a. Then, the selectors 3, 4 select the outputs of the γ 1A converter circuit 1a and the γ 2A converter circuit 2a and output them to the selector 5. The distribution decision circuit 8 outputs, to the selector 5, a selection signal S2 for driving the first sub-pixel S1 using the output of the first type of first γ -characteristic γ 1A and driving the second sub-pixel S2 using the output of the first type of second γ -characteristic γ 2A. The selector 5 selects the outputs of the γ 1A converter circuit 1a and the γ 2A converter circuit 2a, so that the driving circuit 9 can drive the first sub-pixel S1 using the output of the first type of first γ -characteristic γ 1A and drive the second sub-pixel S2 using the output of the first type of second γ -characteristic γ 2A. Then, it outputs them to the driving circuit 9. Consequently, if the transmittance which should be used for display is within the range of 0 to TA, the liquid-crystal panel 10a can be driven using the video signal γ -corrected by use of the first type of synthetic γ -characteristic γ A which is least shifted from the reference γ -characteristic γ f.

Next, if the transmittance which should be used for display is within a range of TA to 1, the γ -decision circuit 7 outputs, to the selectors 3, 4, a selection signal S1 for selecting the γ 1B converter circuit 1b and the γ 2B converter circuit 2b. Then, the selectors 3, 4 select the outputs of the γ 1B converter circuit 1b and the γ 2B converter circuit 2b and output them to the selector 5. The distribution decision circuit 8 outputs, to the selector 5, a selection signal S2 for driving the second sub-pixel S2 using the output of the second type of first γ -characteristic γ 1B and driving the first sub-pixel S1 using the output of the second type of second γ -characteristic γ 2B. The selector 5 selects the outputs of the γ 1B converter circuit 1b and the γ 2B converter circuit 2b, so that the driving circuit 9 can drive the second sub-pixel S2 using the output of the second type of first γ -characteristic γ 1B and drive the first sub-pixel S1 using the output of the second type of second γ -characteristic γ 2B. Then, it outputs them to the driving circuit 9. As a result, if the transmittance which should be used for display is within the range of TA to 1, the liquid-crystal panel 10a can be driven using the video signal γ -corrected by use of the second type of synthetic γ -characteristic γ B which is least shifted from the reference γ -characteristic γ f.

As described above, in this embodiment, the video signal IS is γ -converted, using two pairs of γ -characteristics which are made up of first and second γ -characteristics different from each other. Then, one pair of γ -characteristics are selected out of the two pairs of γ -characteristics according to a transmittance to be used for display, and an output to be supplied to the liquid-crystal panel 10a is selected from among the four outputs so that the distribution area ratio of sub-pixels driven by the video signal γ -corrected by use of the first γ -characteristic of the selected pairs of γ -characteristics and the distribution area ratio of sub-pixels driven by the video signal γ -corrected by use of the second γ -characteristic of the selected pairs of γ -characteristics are equal to a distribution area ratio specified in advance for each pair of γ -characteristics. Therefore, the video signals γ -corrected by use of the first and the second γ -characteristics most suitable for a transmittance to be used for display are selected at the most suitable distribution area ratio for the transmittance to be used for display. This helps realize a good viewing angle characteristic at every transmittance.

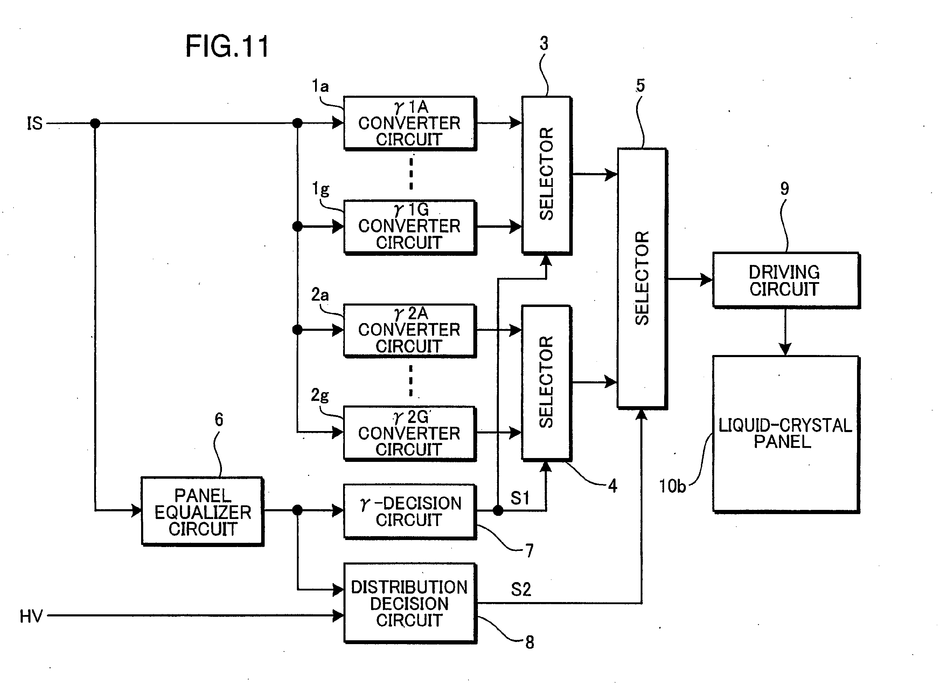

Next, a liquid-crystal display apparatus according to a second embodiment of the present invention will be described. Fig. 11 is a block diagram, showing the configuration of the liquid-crystal display apparatus according to the second embodiment of the present invention. The liquid-crystal display apparatus shown in Fig. 11 includes: a γ 1A converter circuit 1a to a γ 1G converter circuit 1g, seven in total; a γ 2A converter circuit 2a to a γ 2G converter circuit 2g, seven in total; selectors 3 to 5; a panel equalizer circuit 6; a γ -decision circuit 7; a distribution decision circuit 8; a driving circuit 9; and a liquid-crystal panel 10b.

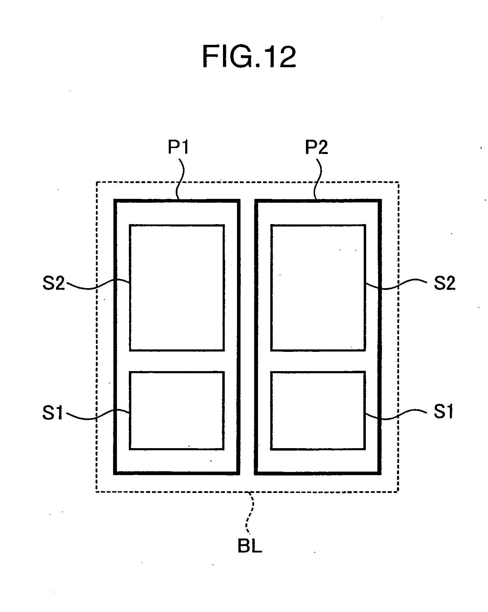

Fig. 12 is an illustration, showing the configuration of a pixel in a liquid-crystal panel shown in Fig. 11. In the liquid-crystal panel 10b, pixels P1, P2 as one pixel is made up of a first sub-pixel S1 which has a pixel area of Sa and a second sub-pixel S2 which has a pixel area of 1.5Sa. It is a liquid-crystal panel in which a plurality of such pixels are disposed in matrix form. The first sub-pixel S1 and the second sub-pixel S2 are separately driven by two TFTs (not shown). In a block BL of two pixels P1, P2, the four sub-pixel S1 , S2 are individually driven by four TFTs.

As described above, the ratio of the pixel area of the first sub-pixel S1 to the pixel area of the second sub-pixel S2 is 2:3. Inside of such a single block BL, the combination of the first sub-pixel S1 and the second sub-pixel S2 is variously changed. Thereby, the distribution area ratio of a sub-pixel for which the first γ -characteristic is used and the distribution area ratio of a sub-pixel for which the second γ -characteristic is used can be set at 2/10:8/10, 3/10:7/10, 4/10:6/10, 5/10:5/10, 6/10:4/10, 7/10:3/10, or 8/10:2/10.

In the γ 1A converter circuit 1a to the γ 1G converter circuit 1g, the γ 2A converter circuit 2a to the γ 2G converter circuit 2g and the panel equalizer circuit 6, a video signal IS is inputted which is separate according to each color component of R, G, B. In the distribution decision circuit 8, a synchronizing signal HV of the video signal IS is inputted, such as a vertical synchronizing signal and a horizontal synchronizing signal.

The γ 1A converter circuit 1a γ -converts the video signal IS, using a first type of first γ -characteristic γ 1A. Then, it outputs the γ -corrected video signal to the selector 3. The γ 2A converter circuit 2a γ -converts the video signal IS, using a first type of second γ -characteristic γ 2A. Then, it outputs the γ -corrected video signal to the selector 4. Herein, the first type of first γ -characteristic γ 1A and the first type of second γ -characteristic γ 2A are γ -characteristics which are complementary to each other. They are the first type of pair of γ -characteristics used for the video signal IS within the lowest transmittance range.

In the same way as described above, the γ 1B converter circuit 1b to the γ 1G converter circuit 1g γ -converts the video signal IS, using second to seventh types of first γ -characteristics γ 1B to γ 1G. Then, it outputs the γ -corrected video signal to the selector 3. The γ 2C converter circuit 2c to the γ 2G converter circuit 2g γ -coverts the video signal IS, using second to seventh types of second γ -characteristics γ 2B to γ 2G. Then, it outputs the γ -corrected video signal to the selector 4. Herein, the second to seventh types of first γ -characteristics γ 1B to γ 1G and the second to seventh types of second γ -characteristics γ 2B to γ 2G are γ -characteristics which are complementary to each other, respectively. They are the second to seventh types of pairs of γ -characteristics used for the video signal IS within the second to seventh lowest transmittance range.

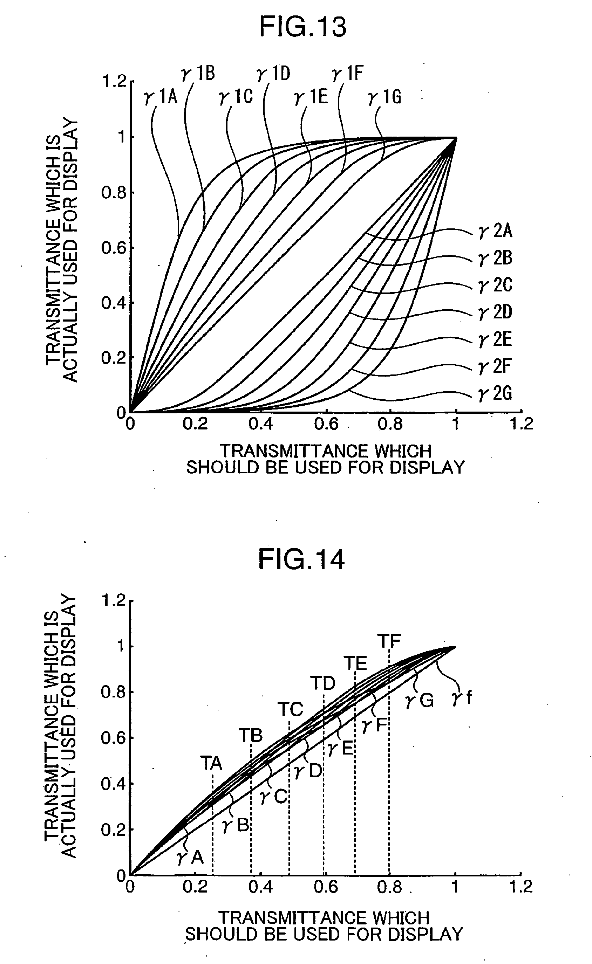

Fig. 13 is a graphical representation, showing an example of the first to seventh types of first γ -characteristics γ 1A to γ 1G and the second γ -characteristics γ 2A to γ 2G which are used in the liquid-crystal display apparatus shown in Fig. 11. As shown in Fig. 13, the γ 1A converter circuit 1a has the first type of first γ -characteristic γ 1A, and the γ 2A converter circuit 2a has the first type of second γ -characteristic γ 2A. After this, similarly, the γ 1B converter circuit 1b to the γ 1G converter circuit 1g have the second to seventh types of first γ -characteristics γ 1B to γ 1G, and the γ 2B converter circuit 2b to the γ 2G converter circuit 2g has the second to seventh types of second γ -characteristics γ 2B to γ 2G.

The panel equalizer circuit 6 is a circuit which has a conversion characteristic equivalent to an input-and-output characteristic P(x) of the liquid-crystal panel 10b. It outputs a video signal into which the video signal IS has been converted using the input-and-output characteristic P(x) of the liquid-crystal panel 10b, to the γ -decision circuit 7 and the distribution decision circuit 8.

The γ -decision circuit 7 specifies a transmittance to be used for display from the video signal corrected by use of the input-and-output characteristic P(x) of the liquid-crystal panel 10b. Then, it outputs, to the selectors 3 and 4, a selection signal S1 for selecting a γ-converter circuit which executes a γ-conversion using the first and second γ-characteristics of the pair of γ-characteristics which corresponds to the transmittance it has specified.

The distribution decision circuit 8 specifies the pixel position of the video signal IS on the display screen of the liquid-crystal panel 10b, as a reference, using the vertical synchronizing signal and horizontal synchronizing signal of the synchronizing signal HV. It also specifies a transmittance to be used for display from the video signal corrected by use of the input-and-output characteristic P(x) of the liquid-crystal panel 10b. Then, it outputs, to the selector 5, a selection signal S2 for changing the γ -characteristic to the distribution area ratio which corresponds beforehand to the pair of γ-characteristics of the transmittance it has specified.

The selector 3 selects one output from among the seven outputs of the γ1A converter circuit 1a to the γ1G converter circuit 1g according to the selection signal S1. Then, it outputs it to the selector 5. It selects the output of the γ1A converter circuit 1a if the transmittance is within the lowest range, and selects the outputs of the γ1B converter circuit 1b to the γ1G converter circuit 1g according to an increase in the transmittance.

The selector 4 selects one output from among the seven outputs of the γ2A converter circuit 2a to the γ2G converter circuit 2g according to the selection signal S1. Then, it outputs it to the selector 5. It selects the output of the γ2A converter circuit 2a if the transmittance is within the lowest range, and selects the outputs of the γ2B converter circuit 2b to the γ2G converter circuit 2g according to an increase in the transmittance.

The selector 5 selects an output to be supplied to the liquid-crystal panel 10b from among the seven outputs of the selectors 3, 4 according to the selection signal S2. Then, it outputs it to the driving circuit 9. Specifically, if the transmittance is within the lowest range, in other words, if the first type of pair of γ-characteristics is selected, then the selector 5 outputs the outputs of the γ1A converter circuit 1a and the γ2A converter circuit 2a to the driving circuit 9, so that the percentage of the distribution area ratio of a sub-pixel which is driven using the output of the first type of first γ-characteristic γ 1A and the distribution area ratio of a sub-pixel which is driven using the output of the first type of second γ -characteristic γ2A becomes 2/10:8/10. After this, in the same way, if the second to seventh types of pairs of γ -characteristics are selected according to an increase in the transmittance, then it outputs, to the driving circuit 9, the outputs of the γ1B converter circuit 1b to the γ1G converter circuit 1g and the γ2B converter circuit 2b to the γ2G converter circuit 2g are outputted to the driving circuit 9, so that the percentage of the distribution area ratio of a sub-pixel which is driven using the output of the second to seventh types of first γ-characteristics γ 1B to γ1G and the distribution area ratio of a sub-pixel which is driven using then output of the second to seventh types of second γ-characteristics γ2B to γ2G becomes 3/10:7/10, 4/10:6/10, 5/10:5/10, 6/10:4/10, 7/10:3/10, 8/10:2/10, respectively.

The driving circuit 9 is formed by a polarity inverting circuit, a gate driving circuit, a source driving circuit, or the like. Using a video signal outputted from the selector 5, it drives the liquid-crystal panel 10b through the source driving circuit. Then, it displays an image indicated by the video signal IS in the liquid-crystal panel 10b.

Herein, let's generalize the above described processing. If the number of types of pairs of γ-characteristics is n (which is an integer of two or above) and if each pixel of the display panel is made up of a first sub-pixel which has a first pixel area Sa and a second sub-pixel which has a second pixel area Sb (=m×Sa, herein, m〉1), then in a block unit of the two pixels per block, an output to be supplied to the liquid-crystal panel is selected from among the 2n γ-corrected outputs, so that the percentage of the first distribution area ratio of sub-pixels driven by a video signal γ-corrected by use of the first γ-characteristic of each pair of γ-characteristics and the second distribution area ratio of sub-pixels driven by a video signal γ-corrected by use of the second γ-characteristic are equal to a distribution area ratio specified in advance for each pair of γ-characteristics. At this time, the first distribution area ratio and the second γ distribution area ratios for each pair of γ-characteristics are selected from among 1/(2+2m), m/(2+2m), 2/(2+2m), (1+m)/(2+2m), 2m/(2+2m), (2+m)/(2+2m) and (2m+1)/(2+2m). Herein, it is preferable that the above described second pixel area Sb satisfy the relation of 1.2Sa≦Sb≦2Sa. In this case, without lowering a display definition, using a display panel which includes two types of sub-pixels, a good viewing angle characteristic can be realized at a wide-ranging transmittance.

In this embodiment, the liquid-crystal panel 10b corresponds to an example of the display panel; the γ1A converter circuit 1a to the γ1G converter circuit 1g and the γ2A converter circuit 2a to the γ2G converter circuit 2g, to an example of the converting means; and the selectors 3 to 5, the γ-decision circuit 7 and the distribution decision circuit 8, to an example of the selecting means.

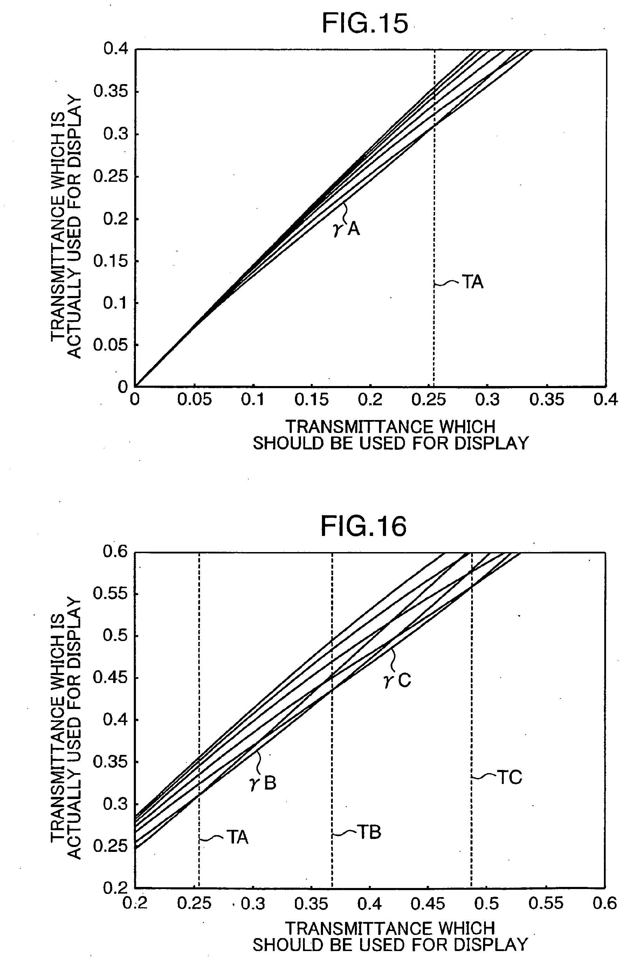

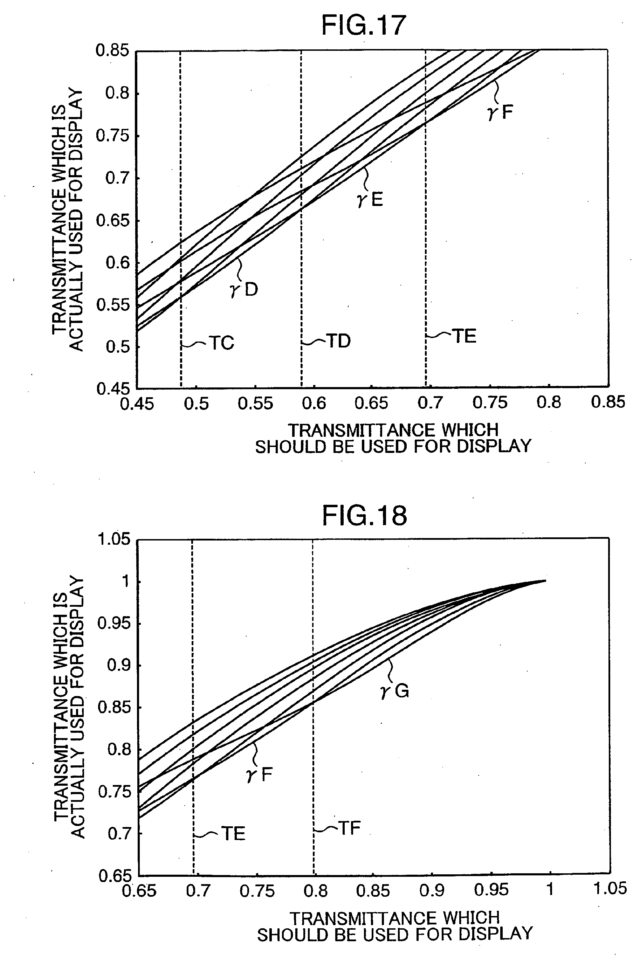

Next, an example will be described of the control of a γ-characteristic in accordance with a transmittance in the liquid-crystal display apparatus which has the above described configuration. Fig. 14 is a graphical representation, showing the example of the control of a γ-characteristic in accordance with a transmittance in the liquid-crystal display apparatus shown in Fig. 11. Fig. 15 to Fig. 18 are a graphical representation, showing first to fourth partially-enlarged parts of the graphical representation shown in Fig. 14, respectively.

As shown in Fig. 14 and Fig. 15, first, if the transmittance which should be used for display is within a range of 0 to TA, the γ-decision circuit 7 outputs, to the selectors 3, 4, a selection signal S1 for selecting the γ 1A converter circuit 1a and the γ2A converter circuit 2a. Then, the selectors 3, 4 select the outputs of the γ1A converter circuit 1a and the γ2A converter circuit 2a and output them to the selector 5. The distribution decision circuit 8 outputs, to the selector 5, a selection signal S2 for setting the distribution area ratio of sub-pixels driven using the output of the first type of first γ-characteristic γ1A and the distribution area ratio of sub-pixels driven using the output of the first type of second γ-characteristic γ2A at 2/10: 8/10. The selector 5 selects the outputs of the γ1A converter circuit 1a and the γ2A converter circuit 2a, so that the percentage of the distribution area ratio of sub-pixels driven using the output of the first type of first γ-characteristic γ 1A and the distribution area ratio of sub-pixels driven using the output of the first type of second γ-characteristic γ2A becomes 2/10:8/10. Then, it outputs, to the driving circuit 9, the video signal γ-corrected by use of the first type of synthetic γ-characteristic γA. Consequently, if the transmittance which should be used for display is within the range of 0 to TA, the liquid-crystal panel 10b can be driven using the video signal as γ corrected by use of the first type of synthetic γ-characteristic γA which is least shifted from the reference γ-characteristic γf.

After this, in the same way as described above, if the transmittance which should be used for display is within each range of TA to TB, TB to TC, TC to TD, TD to TE, TE to TF, TF to 1 (see Fig. 16 to Fig. 18), then the γ-decision circuit 7 outputs, to the selectors 3, 4, a selection signal S1 for selecting the γ1B converter circuit 1b and the γ2B converter circuit 2b to the γ1G converter circuit 1g and the γ2G converter circuit 2g. Then, the selectors 3, 4 select the outputs of the γ1B converter circuit 1b and the γ2B converter circuit 2b to the γ1G converter circuit 1g and the γ2G converter circuit 2g. Sequentially, they output them to the selector 5. The distribution decision circuit 8 outputs, to the selector 5, a selection signal S2 for setting the distribution area ratio of sub-pixels driven using the output of the second to seventh types of first γ-characteristics γ1B to γ1G and the distribution area ratio of sub-pixels driven using the output of the second to seventh types of second γ-characteristics γ 2B to γ2G at 3/10: 7/10, 4/10 : 6/10, 5/10:5/10, 6/10:4/10, 7/10:3/10, 8/10:2/10, respectively. The selector 5 selects the outputs of the γ 1B converter circuit 1b and the γ2B converter circuit 2b to the γ1G converter circuit 1g and the γ2G converter circuit 2g, so that the percentage of the distribution area ratio of sub-pixels driven using the output of the second to seventh types of first γ-characteristics γ1B to γ1G and the distribution area ratio of sub-pixels driven using the output of the second to seventh types of second γ-characteristics γ2B to γ2G becomes 3/10:7/10, 4/10:6/10, 5/10:5/10, 6/10:4/10, 7/10:3/10, 8/10:2/10, respectively. Then, it outputs, to the driving circuit 9, the video signal γ-corrected by use of the second to seventh types of synthetic γ-characteristics γB to γ G. As a result, if the transmittance which should be used for display is within each range of TA to TB, TB to TC, TC to TD, TD to TE, TE to TF, TF to 1, the liquid-crystal panel 10b can be driven using the video signal γ-corrected by use of the second to seventh types of synthetic γ -characteristics γB to γG which is least shifted from the reference γ -characteristic γf.

As described above, in this embodiment, the video signal IS is γ-converted, using seven pairs of γ-characteristics which are made up of first and second γ-characteristics different from each other. Then, one pair of γ-characteristics are selected from among the seven pairs of γ-characteristics according to a transmittance to be used for display, and an output to be supplied to the liquid-crystal panel 10a is selected from among the fourteen outputs so that the distribution area ratio of sub-pixels driven by the video signal as γ corrected by use of the first γ-characteristic of the selected pairs of γ-characteristics and the distribution area ratio of sub-pixels driven by the video signal as γ corrected by use of the second γ-characteristic of the selected pairs of γ-characteristics are equal to a distribution area ratio specified in advance for each pair of γ-characteristics. Therefore, the video signals γ -corrected by use of the first and the second γ-characteristics most suitable for a transmittance to be used for display are selected at the most suitable distribution area ratio for the transmittance to be used for display. This helps realize a good viewing angle characteristic at every transmittance.

### Industrial Applicability

As described so far, the present invention is useful for a matrix-type display apparatus or the like which is capable of displaying an image by driving a plurality of pixels disposed in matrix form and realizing a good viewing angle characteristic at a wide-ranging transmittance.

## Claims

1. A matrix-type display apparatus comprising a display panel (10a, 10b) driven by the apparatus including a plurality of pixels (P1, P2) disposed in matrix form, and displaying an image,
the apparatus including:
a converting means (1a, 1b, ..., 1g, 2a, 2b, ..., 2g) adapted to convert an input video signal (IS) into 2n outputs, using n pairs of conversion characteristics each made up of first (γ1A,..., γ1G) and second (γ2A,..., γ2G) conversion characteristics different from each other, wherein n is an integer of two or above and the first and second conversion characteristics are transmittance characteristics according to an input level of the input video signal,
**characterized in that**
at least one pixel (P1, P2) of the plurality of pixels comprises at least two sub-pixels (S1, S2) of different sizes, and one block (BL) comprises at least one of the at least one pixel, and **in that** the apparatus further comprises
a selecting means (3, 4, 5, 7, 8) adapted
to select one pair of conversion characteristics from among the n pairs of conversion characteristics according to the input level of the input video signal that is
equivalent to a transmittance to be used for display of the one block, and
to select an output supplied to the display panel from among the 2n outputs which are corrected by the converting means, so that a ratio of a first distribution area of sub-pixels driven by the video signal corrected by use of the first conversion characteristic of the selected pair of conversion characteristics to a second distribution area of sub-pixels driven by the video signal corrected by use of the second characteristic of the selected pair of conversion characteristics is equal to a distribution area ratio of sub-pixels in the one block, wherein the distribution area ratio is specified in advance for the selected pair of conversion characteristics.

2. The matrix-type display apparatus according to claim 1, wherein:
the block comprises one pixel;
each pixel of the display panel is made up of, as one pixel, a first sub-pixel which has a first pixel area Sa and a second sub-pixel which has a second pixel area Sb =m×Sa, wherein m>1.

3. The matrix-type display apparatus according to claim 2, wherein the second pixel area Sb satisfies the relation of 1.5Sa ≤ Sb ≤ 3Sa.

4. The matrix-type display apparatus according to claim 1, wherein:
each pixel of the display panel is made up of, as one pixel, a first sub-pixel which has a first pixel area Sa and a second sub-pixel which has a second pixel area Sb =m×Sa, wherein m>1; and
the block comprises two pixels.

5. The matrix-type display apparatus according to claim 4, wherein the ratio of the first distribution area with the area of the block and the ratio of the second distribution area with the area of the block for each pair of conversion characteristics are selected from among 1/(2+2m), m/(2+2m), 2/(2+2m), (1+m)/(2+2m), 2m/(2+2m), (2+m)/(2+2m), and (2m+1)/(2+2m).

6. The matrix-type display apparatus according to claim 5, wherein the second pixel area Sb satisfies the relation of 1.2Sa ≤ Sb ≤ 2Sa.

7. The matrix-type display apparatus according to any of claims 1 to 6, wherein each of the at least one pixel of the block is made up of a red sub-pixel, a green sub-pixel and a blue sub-pixel.

8. The matrix-type display apparatus according to any of claims 1 to 7, wherein the display panel is a liquid-crystal display panel.

9. A driving method of a matrix-type display apparatus comprising a display panel (10a, 10b) driven by the apparatus including a plurality of pixels (P1, P2) disposed in matrix form, and displaying an image,
the method including:
a converting step of converting an input video signal (IS), using n pairs of conversion characteristics each made up of first (γ1A,..., γ1G) and second (γ2A,..., γ2G) conversion characteristics different from each other, wherein n is an integer of two or above and the first and second conversion characteristics are transmittance characteristics according to an input level of the input video signal, **characterized in that**
at least one pixel of the plurality of pixels comprises at least two sub-pixels (S1, S2) of different sizes, and one block (BL) comprises at least one of the at least one pixel, and **in that** the method further comprises
a selecting step of selecting one pair of conversion characteristics from among the n pairs of conversion characteristics according to the input level of the input video signal that is equivalent to a transmittance to be used for display of the one block, and selecting an output supplied to the display panel from among the 2n outputs which are corrected in the converting step, so that a ratio of a first distribution area of sub-pixels driven by the video signal corrected by use of the first conversion characteristic of the selected pair of conversion characteristics to a second distribution area of sub-pixels driven by the video signal corrected by use of the second conversion characteristic of the selected pair of conversion characteristics is equal to a distribution area ratio of sub-pixels in the one block , wherein the distribution area ratio is specified in advance for the selected pair of conversion characteristics.

## Patentansprüche

1. Matrixartige Anzeigevorrichtung, mit
einem durch die Vorrichtung angesteuerten Anzeigefeld (10a, 10b), welches eine Vielzahl von matrixförmig angeordneten Bildelementen (P1, P2) enthält, und die ein Bild anzeigt, wobei die Vorrichtung aufweist:
eine Wandlungseinrichtung (1a, 1b,..., 1g, 2a, 2b,..., 2g), die eingerichtet ist, um ein Eingangsvideosignal (IS) unter Verwendung von n Paaren von Wandlungskennlinien in 2n Ausgangssignale umzuwandeln, wobei jedes der Paare aus voneinander verschiedenen ersten (γ1A, γ1B,..., γ1G) und zweiten (γ2A, γ2B,..., γ2G) Wandlungskennlinien besteht, wobei n eine Ganzzahl größer oder gleich zwei ist und die ersten und zweiten Wandlungskennlinien Transmissionskennlinien gemäß einem Eingangspegel des Eingangsvideosignals sind,
**dadurch gekennzeichnet, dass**
zumindest ein Bildelement (P1, P2) aus der Vielzahl von Bildelementen zumindest zwei Unterbildelemente (S1, S2) unterschiedlicher Größen umfasst und ein Block (BL) zumindest eines aus dem zumindest einen Bildelement umfasst, und
dass die Vorrichtung zudem aufweist
eine Auswahleinrichtung (3, 4, 5, 7, 8), die eingerichtet ist,
um gemäß dem Eingangspegel des Eingangsvideosignals, der äquivalent zu einer zur Anzeige des einen Blocks zu nutzenden Transmission ist, ein Paar von Wandlungskennlinien aus den n Paaren von Wandlungskennlinien auszuwählen, und
um aus den durch die Wandlungseinrichtung korrigierten 2n Ausgangssignalen ein dem Anzeigefeld zugeführtes Ausgangssignal auszuwählen, so dass ein Verhältnis einer ersten Verteilungsfläche von Unterbildelementen, die durch das unter Verwendung der ersten Wandlungskennlinie des ausgewählten Paars von Wandlungskennlinien korrigierte Videosignal angesteuert werden, zu einer zweiten Verteilungsfläche von Unterbildelementen, die durch das unter Verwendung der zweiten Kennlinie des ausgewählten Paars von Wandlungskennlinien korrigierte Videosignal angesteuert werden, gleich einem Verteilungsflächenverhältnis von Unterbildelementen in dem einen Block ist, wobei das Verteilungsflächenverhältnis für das ausgewählte Paar von Wandlungskennlinien im Voraus festgelegt ist.

2. Matrixartige Anzeigevorrichtung nach Anspruch 1, wobei:
der Block ein Bildelement umfasst;
jedes Bildelement des Anzeigefeldes als ein Bildelement aus einem ersten Unterbildelement mit einer ersten Bildelementfläche Sa und einem zweiten Unterbildelement mit einer zweiten Bildelementfläche Sb = m × Sa mit m > 1 aufgebaut ist.

3. Matrixartige Anzeigevorrichtung nach Anspruch 2, wobei die zweite Bildelementfläche Sb die Beziehung 1,5Sa ≤ Sb ≤ 3Sa erfüllt.

4. Matrixartige Anzeigevorrichtung nach Anspruch 1, wobei:
jedes Bildelement des Anzeigefeldes als ein Bildelement aus einem ersten Unterbildelement mit einer ersten Bildelementfläche Sa und einem zweiten Unterbildelement mit einer zweiten Bildelementfläche Sb = m × Sa mit m > 1 aufgebaut ist; und
der Block zwei Bildelemente umfasst.

5. Matrixartige Anzeigevorrichtung nach Anspruch 4, wobei das Verhältnis der ersten Verteilungsfläche zur Fläche des Blocks und das Verhältnis der zweiten Verteilungsfläche zur Fläche des Blocks für jedes Paar von Wandlungskennlinien aus 1/(2+2m), m/(2+2m), 2/(2+2m), (1+m)/(2+2m), 2m/(2+2m), (2+m)/(2+2m) und (2m+1)/(2+2m) ausgewählt ist.

6. Matrixartige Anzeigevorrichtung nach Anspruch 5, wobei die zweite Bildelementfläche Sb die Beziehung 1,2Sa ≤ Sb ≤ 2Sa erfüllt.

7. Matrixartige Anzeigevorrichtung nach einem der Ansprüche 1 bis 6, wobei jedes aus dem zumindest einen Bildelement des Blocks aus einem roten, einem grünen und einem blauen Unterbildelement aufgebaut ist.

8. Matrixartige Anzeigevorrichtung nach einem der Ansprüche 1 bis 7, wobei das Anzeigefeld ein Flüssigkristallanzeigefeld ist.

9. Ansteuerverfahren einer matrixartigen Anzeigevorrichtung mit einem durch die Vorrichtung angesteuerten Anzeigefeld (10a, 10b), welches eine Vielzahl von matrixförmig angeordneten Bildelementen (P1, P2) enthält und die ein Bild anzeigt, wobei das Verfahren enthält:
einen Wandlungsschritt zum Wandeln eines Eingangsvideosignals (IS) unter Verwendung von n Paaren von Wandlungskennlinien, wobei jedes der Paare aus voneinander verschiedenen ersten (γ1A, γ1B,..., γ1G) und zweiten (γ2A, γ2B,..., γ2G) Wandlungskennlinien besteht, wobei n eine Ganzzahl größer oder gleich zwei ist und die ersten und zweiten Wandlungskennlinien Transmissionskennlinien gemäß einem Eingangspegel des Eingangsvideosignals sind,
**dadurch gekennzeichnet, dass**
zumindest ein Bildelement aus der Vielzahl von Bildelementen zumindest zwei Unterbildelemente (S1, S2) unterschiedlicher Größe umfasst und ein Block (BL) zumindest eines aus dem zumindest einen Bildelement umfasst, und dass das Verfahren zudem aufweist
einen Auswahlschritt
zum Auswählen eines Paars von Wandlungskennlinien aus den n Paaren von Wandlungskennlinien gemäß dem Eingangspegel des Eingangsvideosignals, der äquivalent zu einer zur Anzeige des einen Blocks zu nutzenden Transmission ist, und
zum Auswählen eines dem Anzeigefeld zugeführten Ausgangssignals aus den im Wandlungsschritt korrigierten 2n Ausgangssignalen, so dass ein Verhältnis einer ersten Verteilungsfläche von Unterbildelementen, die durch das unter Verwendung der ersten Wandlungskennlinie des ausgewählten Paars von Wandlungskennlinien korrigierte Videosignal angesteuert werden, zu einer zweiten Verteilungsfläche von Unterbildelementen, die durch das unter Verwendung der zweiten Wandlungskennlinie des ausgewählten Paars von Wandlungskennlinien korrigierte Videosignal angesteuert werden, gleich einem Verteilungsflächenverhältnis von Unterbildelementen in dem einen Block ist, wobei das Verteilungsflächenverhältnis für das ausgewählte Paar von Wandlungskennlinien im Voraus festgelegt ist.

## Revendications

1. Appareil d'affichage matriciel comprenant un panneau d'affichage (10a, 10b) commandé par l'appareil comportant une pluralité de pixels (P1, P2) disposés sous forme matricielle, et affichant une image,
l'appareil comportant :
un moyen de conversion (1a, 1b, ..., 1g, 2a, 2b, ..., 2g) adapté pour convertir un signal vidéo d'entrée (IS) en 2n sorties, en utilisant n paires de caractéristiques de conversion chacune composée de première (γ1A, ..., γ1G) et deuxième (γ2A, ..., γ2G) caractéristiques de conversion différentes entre elles, où n est un entier supérieur ou égal à deux et les première et deuxième caractéristiques de conversion sont des caractéristiques de transmittance selon un niveau d'entrée du signal vidéo d'entrée,
**caractérisé en ce que**
au moins un pixel (P1, P2) de la pluralité de pixels comprend au moins deux sous pixels (S1, S2) de tailles différentes, et un bloc (BL) comprend au moins l'un de l'au moins un pixel, et **en ce que** l'appareil comprend en outre
un moyen de sélection (3, 4, 5, 7, 8) adapté
pour sélectionner une paire de caractéristiques de conversion parmi les n paires de caractéristiques de conversion selon le niveau d'entrée du signal vidéo d'entrée qui est équivalente à une transmittance à utiliser pour l'affichage du bloc, et
pour sélectionner une sortie fournie au panneau d'affichage parmi les 2n sorties qui sont corrigées par le moyen de conversion, de sorte qu'un rapport d'une première surface de distribution de sous pixels commandés par le signal vidéo corrigé en utilisant la première caractéristique de conversion de la paire sélectionnée de caractéristiques de conversion par une deuxième surface de distribution de sous pixels commandés par le signal vidéo corrigé en utilisant la deuxième caractéristique de la paire sélectionnée de caractéristiques de conversion soit égale à un rapport de surfaces de distribution de sous pixels dans le bloc, où le rapport de surfaces de distribution est préalablement spécifié pour la paire sélectionnée de caractéristiques de conversion.

2. Appareil d'affichage matriciel selon la revendication 1, dans lequel :
le bloc comprend un pixel ;
chaque pixel du panneau d'affichage est composé de, au à d'un pixel, un premier sous pixel qui a une surface de premier pixel Sa et un deuxième sous pixel qui a une surface de deuxième pixel Sb = m * Sa, où m>1.

3. Appareil d'affichage matriciel selon la revendication 2, dans lequel la surface de deuxième pixel Sb satisfait la relation de 1,5Sa ≤ Sb ≤ 3Sa.

4. Appareil d'affichage matriciel selon la revendication 1, dans lequel :
chaque pixel du panneau d'affichage est composé de, à titre d'un pixel, un premier sous pixel qui a une surface de premier pixel Sa et un deuxième sous pixel qui a une surface de deuxième pixel Sb = m * Sa, où m>1 ; et
le bloc comprend deux pixels.

5. Appareil d'affichage matriciel selon la revendication 4, dans lequel le rapport de la première surface de distribution avec la surface du bloc et le rapport de la deuxième surface de distribution avec la surface du bloc pour chaque paire de caractéristiques de conversion sont sélectionnés parmi 1/(2+2m), m/(2+2m), 2/(2+2m), (1+m)/(2+2m), 2m/(2+2m), (2+m)/(2+2m), et (2m+1)/(2+2m).

6. Appareil d'affichage matriciel selon la revendication 5, dans lequel la surface de deuxième pixel Sb satisfait la relation de 1,2Sa ≤ Sb ≤ 2Sa.

7. Appareil d'affichage de type matrice selon l'une des revendications 1 à 6, dans lequel chacun de l'au moins un pixel du bloc est composé d'un sous pixel rouge, d'un sous pixel vert et d'un sous pixel bleu.

8. Appareil d'affichage de type matrice selon l'une des revendications 1 à 7, dans lequel le panneau d'affichage est un panneau d'affichage à cristaux liquides.

9. Procédé d'entraînement d'un appareil d'affichage matriciel comprenant un panneau d'affichage (10a, 10b) commandé par l'appareil comportant une pluralité de pixels (P1, P2) disposés sous forme matricielle, et affichant une image,
le procédé comportant :
une étape de conversion consistant à convertir un signal vidéo d'entrée (IS), en utilisant n paires de caractéristiques de conversion chacune composée de première (γ1A, ..., γ1G) et deuxième (γ2A, ..., γ2G) caractéristiques de conversion différentes entre elles, où n est un entier supérieur ou égal à deux et les première et deuxième caractéristiques de conversion sont des caractéristiques de transmittance selon un niveau d'entrée du signal vidéo d'entrée,
**caractérisé en ce que**
au moins un pixel de la pluralité de pixels comprend au moins deux sous pixels (S1, S2) de différentes tailles, et un bloc (BL) comprend au moins l'un de l'au moins un pixel, et **en ce que** le procédé comprend en outre
une étape de sélection consistant à sélectionner une paire de caractéristiques de conversion parmi les n paires de caractéristiques de conversion selon le niveau d'entrée du signal vidéo d'entrée qui est équivalente à une transmittance à utiliser pour l'affichage du bloc, et sélectionner une sortie fournie au panneau d'affichage parmi les 2n sorties qui sont corrigées dans l'étape de conversion, de sorte qu'un rapport d'une première surface de distribution de sous pixels commandés par le signal vidéo corrigé en utilisant la première caractéristique de conversion de la paire sélectionnée des caractéristiques de conversion par une deuxième surface de distribution de sous pixels commandés par le signal vidéo corrigé en utilisant la deuxième caractéristique de conversion de la paire sélectionnée de caractéristiques de conversion soit égale à un rapport de surfaces de distribution de sous pixels dans le bloc, où le rapport de surfaces de distribution est préalablement spécifié pour la paire sélectionnée de caractéristiques de conversion.
